# EUROPEAN PATENT APPLICATION

(11) **EP 2 468 839 A1**
(43) Date of publication of application: **27.06.2012**
(21) Application number: 10197064.8
(22) Date of filing: 27.12.2010
(51) Int. Cl.: C10G 45/00, C10G 45/02, C10G 47/00, C10G 49/22, C01B 3/00, C01B 3/04

(54) **Process for producing hydrocarbons from syngas**

(71) Applicant: Shell Internationale Research Maatschappij B.V., 2596 HR The Hague (NL)
(72) Inventor: The designation of the inventor has not yet been filed
(74) Representative: Matthezing, Robert Maarten

(57) **Abstract**

The invention pertains to a process for the production of hydrocarbons in which a hydrogen-rich syngas is subjected to shift conversion, followed by purification in a PSA. The obtained hydrogen stream is used to hydrocrack a Fischer-Tropsch product. After fractionation of the resulting product, a hydrogen-rich light fraction is recycled to the PSA.

## Description

The present invention relates to a process for the production of hydrocarbon products from syngas. The invention especially relates to a process in which optimal use is made of the hydrogen comprising streams.

The manufacture and further processing of syngas has been found to be an attractive manner for processing various types of hydrocarbonaceous feedstock.

A first source for the manufacture of syngas are light hydrocarbon feeds, especially methane from natural sources, for example natural gas, associated gas and/or coal bed methane. There is not always the option to use the gas at its source. Transportation of gas, for example through a pipeline or in the form of liquefied natural gas, requires extremely high capital expenditure or is simply not practical. This holds true even more in the case of relatively small gas production rates and/or fields. Re-injection of gas will add to the costs of oil production, and may, in the case of associated gas, result in undesired effects on crude oil production. Burning of associated gas has become an undesirable option in view of depletion of hydrocarbon sources and air pollution. One of the ways to process this gas is the conversion into syngas. The gas may, for example, be converted by a gasification process such as the Shell Gasification Process.

A further source for the manufacture of syngas are the very heavy hydrocarbon fractions, or feedstock which is difficult to process by other means. Examples of this type of feedstock include peat, biomass, or coal. These materials can also be converted to syngas by gasification. After the gasification of these materials often an acid gas removal step is required in which COS, H₂S and CO₂ are removed in order to obtain clean syngas.

The syngas manufactured from the above, or other, sources, can be converted in one or more steps over a suitable catalyst at elevated temperature and pressure into mainly paraffinic compounds ranging from methane to high molecular weight molecules comprising up to 200 carbon atoms, or, under particular circumstances, even more.

While the products obtained in a Fischer-Tropsch synthesis have attractive properties, for example low levels of contaminant like sulphur and nitrogen, they generally have a too high melting point to be directly suitable for general use as liquid fuels or lubricants. Therefore, especially the higher-boiling fractions are generally subjected to an upgrading step. The upgrading step is intended to effect one or more of a decrease in viscosity, a decrease in pour point or cloud point, and a decrease in (end) boiling point.

In the art, products obtained from a Fischer-Tropsch process are often subjected to a hydrocracking step, or a hydrocracking/hydroisomerisation step.

The hydrogen required for the hydrocracking step, or the hydrocracking/hydroisomerisation step, may be obtained as follows. A hydrogen-rich syngas is made; this may be made using a furnace and/or boiler, e.g., a steam-methane reformer furnace (SMR), or a high-pressure steam boiler combined with a superheater, a gasification process and/or a gas heater reformer. One possible feed for the production of hydrogen-rich syngas is natural gas. The obtained hydrogen-rich syngas is in a next step subjected to shift conversion over a shift catalyst. During the shift conversion carbon monoxide reacts with steam to produce carbon dioxide and additional hydrogen. After the shift reaction the gas is purified in a pressure swing adsorption unit (PSA). Using the PSA, CO₂ and H₂O can be removed. The product of the PSA can comprise more than 99 vol% hydrogen, or even more than 99.9 vol% hydrogen.

The hydrocracking, or hydrocracking/hydroiso merisation of a Fischer-Tropsch product, is often followed by a fractionation step. The fractionation may be performed by distillation, for example using a synthetic crude distiller. Distillation fractions may be, for example, LPG, naphtha, kerosene, gas oil, and a bottom product stream. One or more boiling point fractions, especially a bottom product stream, of the hydrocracked product, or the hydrocracked/hydroisomerised product, can be subjected to a dewaxing step. A very light fraction, lighter than LPG, may be treated as offgas and sent to a fuel pool.

There is need for improvement of the process, and the present invention provides such an improved process.

It has now been found that this problem can be solved by the process according to the invention.

The present invention provides a process for the production of hydrocarbons, which comprises the steps of:
a) providing hydrogen-rich syngas;
b) subjecting the hydrogen-rich syngas to shift conversion;
c) purifying the gaseous product obtained in step (b) in a pressure swing adsorption unit (PSA) until a hydrogen stream comprising more than 99 vol% hydrogen is obtained;
d) feeding the obtained hydrogen stream to a reaction zone where it is contacted with paraffinic hydrocarbons at a temperature in the range of 175 to 400 °C and a pressure in the range of 20 to 100 bar,
   said paraffinic feedstock having been obtained by providing syngas to a Fischer-Tropsch reactor and allowing CO and hydrogen to convert into hydrocarbon products at a temperature in the range from 125 to 400 °C and a pressure in the range from 5 to 150 bar absolute, and a gaseous hourly space velocity in the range from 500 to 10000 Nl/l/h, followed by withdrawing of the hydrocarbon products from the Fischer-Tropsch reactor;
f) withdrawing the effluent from the reaction zone through an outlet;
g) subjecting the effluent from the reaction zone to a fractionation step to form at least a heavy fraction and a hydrogen-rich light fraction;
h) providing at least a part of the hydrogen-rich light fraction to step (c) where it is purified together with the gaseous product obtained in step (b) in a pressure swing adsorption unit (PSA) until a hydrogen stream comprising more than 99 vol% hydrogen is obtained.

In a process according to the present invention the hydrogen-rich light fraction obtained after fractionation of the hydrocracking product, or hydrocracking/hydroiso merisation product, is recycled instead of sent to a fuel pool.

One advantage of this process is that less hydrogen has to be produced for the refinery of Fischer-Tropsch products, especially for the hydrocracking, or hydrocracking/hydroisomerisation, of Fischer-Tropsch products.

A further advantage is that the furnace and/or boiler, for example an SMR, which is used for the production of the hydrogen-rich syngas can be smaller. Additionally or alternatively, the hydrogen-rich syngas produced in the furnace and/or boiler can be used in a Fischer-Tropsch reaction, especially when the Fischer-Tropsch reaction is performed using a first stage and a second stage Fischer-Tropsch reactor. When the Fischer-Tropsch reaction is performed using a first stage and a second stage Fischer-Tropsch reactor, the hydrogen-rich syngas is preferably sent to the second stage reactor together with unconverted syngas from the first stage reactor.

The hydrogen-rich syngas provided in step (a) may be made using a furnace and/or boiler, e.g., a steam-methane reformer furnace (SMR), or a high-pressure steam boiler combined with a superheater, a gasification process and/or a gas heater reformer. One possible feed for the production of hydrogen-rich syngas is natural gas. The hydrogen-rich syngas preferably has a hydrogen/CO mole ratio of at least 2, more preferably of at least 5, even more preferably of at least 10.

The obtained hydrogen-rich syngas is in a next step, step (b), subjected to shift conversion over a shift catalyst, which is sometimes referred to as a water-gas-shift (WGS) catalyst. During the shift conversion carbon monoxide reacts with steam to produce carbon dioxide and additional hydrogen. Examples of suitable shift catalysts are an iron and iron oxide catalysts, iron oxide promoted with chromium oxide, and copper on a mixed support composed of zinc oxide and aluminum oxide. After the shift conversion, the obtained gaseous product preferably comprises at least 60 vol% hydrogen, more preferably at least 70 vol%, even more preferably at least 75 vol%.

After the shift reaction the gas is purified in a pressure swing adsorption unit (PSA) in step (c). Using the PSA, CO₂ and H₂O can be removed. The product of the PSA comprises more than 99 vol% hydrogen. Preferably the gaseous product obtained by the shift reaction is purified in the PSA until a hydrogen stream comprising more than 99.9 vol% hydrogen is obtained.

The paraffinic hydrocarbons used in step (d) have been obtained by a Fischer-Tropsch reaction.

The Fischer-Tropsch reactors that may be used to obtain the paraffinic hydrocarbons used in the present invention preferably contain a Fischer-Tropsch catalyst. Preferably the Fischer-Tropsch catalyst comprises a Group VIII metal component, more preferably cobalt, iron and/or ruthenium, most preferably cobalt. References to the Periodic Table and groups thereof used herein refer to the previous IUPAC version of the Periodic Table of Elements such as that described in the 68th Edition of the Handbook of Chemistry and Physics (CPC Press).

Typically, the catalysts comprise a catalyst carrier. The catalyst carrier is preferably porous, such as a porous inorganic refractory oxide, more preferably alumina, silica, titania, zirconia or combinations thereof, most preferably titania.

The optimum amount of catalytically active metal present on the carrier depends inter alia on the specific catalytically active metal. Typically, the amount of cobalt present in the catalyst may range from 1 to 100 parts by weight per 100 parts by weight of carrier material, preferably from 10 to 50 parts by weight per 100 parts by weight of carrier material. In case the catalyst comprises cobalt and titania, the amount of cobalt preferably is in the range of between 10 weight percent (wt%) and 35 wt% cobalt, more preferably between 15 wt% and 30 wt% cobalt, calculated on the total weight of titania and cobalt.

In step (d) a hydrogen stream is contacted with paraffinic hydrocarbons that were obtained by a Fischer-Tropsch reaction. In step (d) hydrocracking or hydrocracking/hydroisomerisation takes place.

Normally a catalyst is used in step (d). In this step a catalyst is used which preferably contains a catalytically active metal component as well as an acidic function. The metal component can be deposited on any acid carrier having cracking and isomerisation activity, for example a halogenated (e.g. fluorided or chlorided) alumina or zeolitic carrier or an amorphous silica/alumina carrier.

Preferably the hydrocracking or hydrocracking/hydroisomerisation catalyst comprises a mixture of two refractory oxides, more preferably amorphous silica/alumina. Preferably the catalyst comprises a zeolite, preferably zeolite beta, in addition to amorphous silica/alumina. The silica:alumina ratio of the zeolite (beta) most preferably is in the range from 5 to 500, more preferably in the range from 50 to 300.

The catalyst used in the hydrocracking/hydroiso merisation step may contain as catalytically active metal components one or more metals selected from Groups VIB, VIIB and/or VIII of the Periodic System. Examples of such metals are molybdenum, tungsten, rhenium, the metals of the iron group and the metals of the platinum and palladium groups. Catalysts with a noble metal as catalytically active metal component generally contain 0.05-5 parts by weight and preferably 0.1-2 parts by weight of metal per 100 parts by weight of carrier material. Very suitable noble metals are palladium and platinum. Catalysts with a non-noble metal or a combination of non-noble metals as catalytically active metal component generally contain 0.1-35 parts by weight of metal or combination of metals per 100 parts by weight of carrier material. Very suitable hydrocracking catalysts contain a combination of 0.5-20 parts by weight and in particular 1-10 parts by weight of a non-noble metal of Group VIII and 1-30 parts by weight and in particular 2-20 parts by weight of a metal of Group VIB and/or VIIB per 100 parts by weight of carrier material. Particularly suitable metal combinations are combinations of nickel and/or cobalt with tungsten and/or molybdenum and/or rhenium. Likewise very suitable as hydrocracking catalysts are catalysts which contain 0.1-35 parts by weight and in particular 1-15 parts by weight of nickel per 100 parts by weight of carrier material.

If the hydrocracking or hydrocracking/hydroiso merisation catalysts contain a non-noble metal or combination of non-noble metals as catalytically active metal component, they are preferably used in their sulphidic form. The conversion of the catalysts to their sulphidic form can very suitably be carried out by contacting the catalysts at a temperature below 500 °C with a mixture of hydrogen and hydrogen sulphide in a volume ratio of 5:1 to 15:1. The conversion of the catalysts into the sulphidic form may also be carried out by adding to the feed, under reaction conditions, sulphur compounds in a quantity of from 10 ppmw to 5% by weight and in particular in a quantity of from 100 ppmw to 2.5% by weight.

Most preferably the hydrocracking or hydrocracking/hydroisomerisation catalyst comprises platinum and/or palladium and an amorphous silica/alumina, and optionally zeolite beta.

The effluent from the reaction zone in which hydrocracking, or hydrocracking/hydroisomerisation, takes place is subjected to a fractionation step, for example a distillation. The fractionation may be performed by distillation, for example using a synthetic crude distiller. The effluent is fractionated into at least a heavy fraction and a hydrogen-rich light fraction, and preferably into at least a heavy fraction, an intermediate fraction, and a hydrogen-rich fraction.

Distillation fractions may be, for example, LPG, naphtha, kerosene, gas oil, and a bottom product stream. One or more boiling point fractions, especially a bottom product stream, of the hydrocracked product, or the hydrocracked/hydroisomerised product, can be subjected to a dewaxing step. A very light fraction, preferably lighter than LPG, is a hydrogen-rich light fraction. The hydrogen-rich light fraction may contain more than 50 vol% hydrogen, preferably more than 60 vol% hydrogen. The amount of hydrogen in the hydrogen-rich light fraction can be influenced by the partial hydrogen pressure and the temperature used in the hydrocracking, or hydro cracking/hydroisomerisation step (d). The partial hydrogen pressure used in the hydrocracking, or hydro cracking/hydroisomerisation step (d) preferably is in the range of from 20 bar to 70 bar.

At least a part of the hydrogen-rich light fraction is provided to step (c) where it is purified together with the gaseous product obtained in step (b) in a pressure swing adsorption unit (PSA) until a hydrogen stream comprising more than 99 vol% hydrogen is obtained.

## Claims

1. A process for the production of hydrocarbons, which comprises the steps of:
a) providing hydrogen-rich syngas;
b) subjecting the hydrogen-rich syngas to shift conversion;
c) purifying the gaseous product obtained in step (b) in a pressure swing adsorption unit (PSA) until a hydrogen stream comprising more than 99 vol% hydrogen is obtained;
d) feeding the obtained hydrogen stream to a reaction zone where it is contacted with paraffinic hydrocarbons at a temperature in the range of 175 to 400 °C and a pressure in the range of 20 to 100 bar,
said paraffinic feedstock having been obtained by providing syngas to a Fischer-Tropsch reactor and allowing CO and hydrogen to convert into hydrocarbon products at a temperature in the range from 125 to 400 °C and a pressure in the range from 5 to 150 bar absolute, and a gaseous hourly space velocity in the range from 500 to 10000 Nl/l/h, followed by withdrawing of the hydrocarbon products from the Fischer-Tropsch reactor;
f) withdrawing the effluent from the reaction zone through an outlet;
g) subjecting the effluent from the reaction zone to a fractionation step to form at least a heavy fraction and a hydrogen-rich light fraction;
h) providing at least a part of the hydrogen-rich light fraction to step (c) where it is purified together with the gaseous product obtained in step (b) in a pressure swing adsorption unit (PSA) until a hydrogen stream comprising more than 99 vol% hydrogen is obtained.

2. Process according to claim 1, wherein the hydrogen-rich syngas provided in step (a) is made using a furnace and/or boiler, preferably using a steam-methane reformer furnace (SMR), or a high-pressure steam boiler combined with a superheater, or a gas heater reformer.

3. Process according to claim 1 or 2, wherein the hydrogen-rich syngas provided in step (a) has a hydrogen/CO mole ratio of at least 2, more preferably of at least 5, even more preferably of at least 10.

4. Process according to any one of the preceding claims, wherein in step (d) a catalyst is present in the reaction zone, said catalyst comprising platinum and/or palladium and an amorphous silica/alumina, and optionally zeolite beta.

5. Process according to any one of the preceding claims, wherein in step (d) the partial hydrogen pressure in the reaction zone is in the range of from 20 bar to 70 bar.
